# EUROPEAN PATENT APPLICATION

(11) **EP 4 589 733 A1**
(43) Date of publication of application: **23.07.2025**
(21) Application number: 24201659.0
(22) Date of filing: 20.09.2024
(51) Int. Cl.: H01M 10/613, H01M 10/625, H01M 10/6556, H01M 10/6557, H01M 10/6567, H01M 10/6568, H01M 50/209, H01M 50/271

(54) **LIQUID-COOLED BATTERY PACK**

(30) Priority: 18.01.2024 CN 202420128175 U; 02.04.2024 WO PCT/CN2024/085596
(71) Applicant: Eve Energy Storage Co., Ltd, Wuhan, Hubei 430074 (CN)
(72) Inventor: XIE, Weikang, Wuhan, Hubei, 430074 (CN); FENG, Chaojun, Wuhan, Hubei, 430074 (CN); LI, Guotao, Wuhan, Hubei, 430074 (CN); GONG, Muhong, Wuhan, Hubei, 430074 (CN); ZUO, Ding, Wuhan, Hubei, 430074 (CN); WANG, Xuxing, Wuhan, Hubei, 430074 (CN); LIU, Huiguang, Wuhan, Hubei, 430074 (CN)
(74) Representative: Murgitroyd & Company

(57) **Abstract**

A liquid-cooled battery pack includes a case (2), and multiple cells (1) and cooling liquid in the case (2). The case (2) is provided with one or more liquid inlets (21), a liquid-cooled installation chamber (22) and one or more liquid outlets (23) which are connected in sequence to circulate the cooling liquid. The cells (1) are arranged in the liquid-cooled installation chamber (23). Each of the cells (1) is immersed in the cooling liquid and surrounded by the cooling liquid.

## Description

### TECHNICAL FIELD

The present disclosure relates to battery pack technologies, and more particularly, to a liquid-cooled battery pack.

### BACKGROUND

The transition from fossil energy to new energy promotes the rapid development of electric vehicles and energy storage industry. Lithium batteries are a common energy storage option for electric vehicles. However, the charging/discharging efficiency, capacity, safety, and life of the lithium batteries are greatly affected by the temperature. A too high or too low temperature or a large temperature difference between battery packs will directly affect the performance of the battery packs, which may lead to premature failure of the battery system, even accidents such as fire and explosion. Generally, a conventional battery pack has poor heat dissipation effect, so that the consistency of the temperature difference between the cells could not be ensured.

### SUMMARY

According to one or more embodiments of the present disclosure, an liquid-cooled battery pack is provided to solve the technical problem.

According to one or more embodiments of the present disclosure, a liquid-cooled battery pack includes multiple cells and a case. The case is provided with one or more liquid inlets, a liquid-cooled installation chamber and one or more liquid outlets which are connected in sequence to circulate cooling liquid. The multiple cells are disposed in the liquid-cooled installation chamber, immersed in the cooling liquid, and arranged to form a liquid cooling passage. The liquid inlet is located at a first end of the liquid cooling passage, the liquid outlet is located at a second end of the liquid cooling passage, a part of the liquid cooling passage is located between every two adjacent ones of the plurality of cells, and an other part of the liquid cooling passage is located outside the plurality of cells.

A beneficial effect of one or more embodiments of the present disclosure is as follows: according to one or more embodiments of the present disclosure, the multiple cells are located in the liquid cooling installation cavity inside the case to completely immerse the multiple cells in the cooling liquid. The cooling liquid can flow from the first end where the liquid inlet is located, sequentially flow between the multiple cells and outside the multiple cells, and then flow out of the second end where the liquid outlet is located, so that the cooling liquid can better dissipate heat around the cells, thereby achieving better consistency of temperature difference around each of the cells of the battery pack during operation.

### BRIEF DESCRIPTION OF THE DRAWINGS

FIG. 1 is a schematic perspective view of a liquid-cooled battery pack according to one or more embodiments of the present disclosure.
FIG. 2 is a schematic cross-sectional view of a liquid-cooled battery pack according to one or more embodiments of the present disclosure.
FIG. 3 is another schematic cross-sectional view of a liquid-cooled battery pack according to one or more embodiments of the present disclosure.
FIG. 4 is a schematic perspective view of a case of a liquid-cooled battery pack according to one or more embodiments of the present disclosure.
FIG. 5 is a schematic cross-sectional view of a case of a liquid-cooled battery pack according to one or more embodiments of the present disclosure.

### DETAILED DESCRIPTION

Some embodiments of the present disclosure will be described in detail below with reference to the accompanying drawings. The embodiments are described for illustrative purposes only and are not intended to limit the present disclosure.

Generally, a conventional liquid-cooled battery pack is provided with a liquid cooling plate next to a cell. However, with the liquid cooling plate, heat dissipation effect is poor for a high-power cell and the consistency of the temperature difference around the cell is not high.

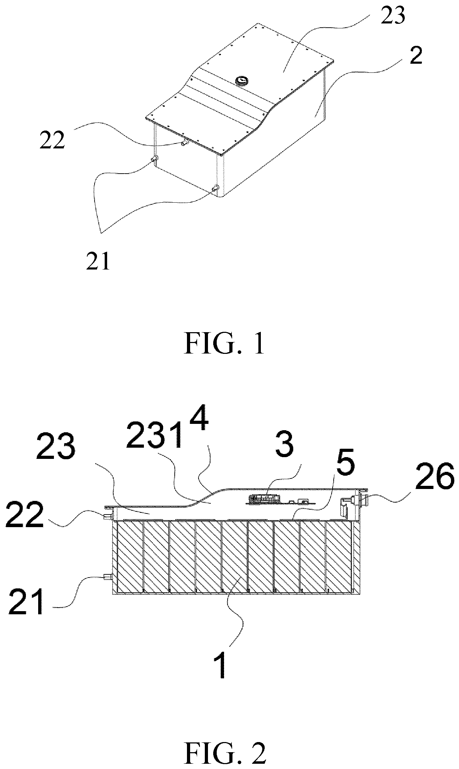

As shown in FIG. 1, FIG. 2 and FIG. 3, a liquid-cooled battery pack according to one or more embodiments of the present disclosure includes a case 2 and multiple cells 1. The case 2 is provided with a liquid inlet 21, a liquid-cooled installation chamber 23, and a liquid outlet 22 which are connected in sequence and are configured to circulate cooling liquid. The multiple cells 1 are arranged in the liquid-cooled installation chamber 23 and are immersed in the cooling liquid. The multiple cells 1 are arranged to form a liquid cooling passage. The liquid inlet 21 is located at a first end of the liquid cooling passage, and the liquid outlet 22 is located at a second end of the liquid cooling passage. A part of the liquid cooling passage is located between every two adjacent ones of the multiple cells 1, and another part of the liquid cooling passage is located outside the multiple cells 1.

It can be appreciated that the multiple cells 1 are located in the liquid-cooled installation chamber 23 inside the case 2, and the cooling liquid is located in the case 2 to completely immerse each of the cells 1, thereby achieving heat dissipation around the cells 1 inside the case 2. Compared to arranging the battery module as a whole inside the box 2, a better heat dissipation effect on multiple battery cells 1 can be achieved.

It can be appreciated that the multiple cells 1 are arranged to form the liquid cooling passage. The liquid inlet 21 is located at the first end of the liquid cooling passage, and the liquid outlet 22 is located at the second end of the liquid cooling passage. A part of the liquid cooling passage is located between every two adjacent ones of the cells 1, and a part of the liquid cooling passage is located outside the multiple cells 1. So that the cooling liquid can flow from the first end where the liquid inlet 21 is located, sequentially flows between the multiple cells 1 and outside the multiple cells 1, and then flow out of the second end where the liquid outlet 22 is located, thereby achieving consistency of temperature differences at various locations inside the battery pack, and ensuring a high heat dissipation effect inside the battery pack.

According to one or more embodiments of the present disclosure, the multiple cells 1 are located in the liquid-cooled installation chamber 23 inside the case 2 to completely immerse the multiple cells 1 in the cooling liquid. The cooling liquid can flow from the first end where the liquid inlet 21 is located, sequentially flows between the multiple cells 1 and outside the multiple cells 1, and then flow out of the second end where the liquid outlet 22 is located, so that the cooling liquid can better dissipate heat around the cells 1, thereby achieving better consistency of temperature difference around each of the cells 1 of the battery pack during operation.

As shown in FIGS. 1 and 2, according to one or more embodiments of the present disclosure, the multiple cells 1 are arranged in an array to form at least two cell units arranged at intervals in a first direction. Each of the cell units include multiple cells 1 arranged at intervals in a second direction. The case 2 is provided with multiple liquid inlets 21, which are respectively disposed on opposite sides of the liquid outlets 22 in the first direction, or the case 2 is provided with multiple liquid outlets 22, which are respectively disposed on opposite sides of the liquid inlets 21 in the first direction.

It can be appreciated that a gap may be provided between every two adjacent ones of the cells 1 of each of the at least two cell units, so that the consistency of the temperature difference of each of the cells 1 is better.

It can be appreciated that the gap between the cells 1 has a small width, making the overall structure more compact, while also reducing the volume of the cooling liquid and reducing the production cost.

It can be appreciated that the multiple cells 1 are divided into multiple cell units arranged in the first direction. The cells respectively in every two adjacent ones of the cell units are aligned to form an outer passage outside the multiple cell units and an inner passage between every two adjacent ones of the multiple cell units. That is, the outer passage and the inner passage can enclose the outer and inner sides of the cells 1. In this way, the cooling liquid 1 flows through the outer passage and the inner passage from the liquid inlet 21, so that a more uniform heat dissipation effect on the inner and outer sides of the cells is achieved, thereby having better consistency of the temperature differences between the cells 1.

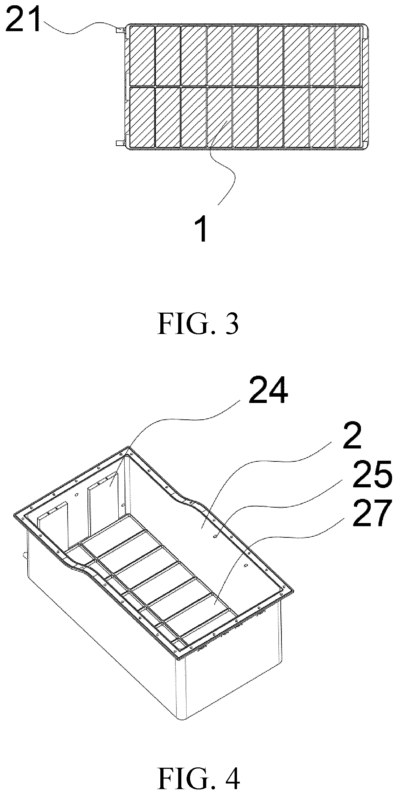

As shown in FIG. 3, in one or more embodiments of the present disclosure, the case 2 has a bottom wall and multiple side walls. The bottom wall and the side walls form the liquid-cooled installation chamber 23. The liquid outlet 22 and the liquid inlet 21 are located on a same one of the side walls. The liquid outlet 22 is disposed in a middle region of the side wall in the first direction, and the multiple liquid inlets 21 are disposed respectively in opposite side regions of the side wall in the first direction.

It can be appreciated that the liquid inlets 21 are located respectively in two regions respectively on both sides of the side wall in the first direction, and the liquid outlet 22 is located in the middle region of the side wall in the first direction, so that the cooling liquid enters the outer side of the multiple cell units from the liquid inlet 21 and then turns back to flow out between the multiple cell units, thereby enabling the heat dissipation of the multiple cell units to be more uniform.

Alternatively, the liquid inlet 21 is provided in the middle region of the side wall in the first direction, and the liquid outlets 22 are provided respectively in opposite side regions of the side wall in the first direction.

It can be appreciated that the liquid inlet 21 is located in the middle region of the side wall in the first direction, and the liquid outlets 22 are located respectively in opposite side regions of the side wall in the first direction, so that the cooling liquid can flow in between the cell units and then turns back to flow out from the outside of the cell units, thereby enabling the heat dissipation of the multiple cell units 1 to be more uniform.

It should be understood that the heat dissipation effects of the above two methods are similar, and a good consistency of the temperature difference between the cells 1 can be ensured.

As shown in FIG. 4, FIG. 4 is a schematic diagram of structure of a case according to one or more embodiments of the present disclosure. In one or more embodiments of the present disclosure, multiple end plates 24 are provided respectively on opposite sides of the case 2 in the second direction, and are arranged to respectively abut against two of the ones of the cells of each of the cell units respectively at opposite ends.

It can be appreciated that multiple end plates 24 are provided respectively on opposite sides of the case 2 in the second direction, so that the gap between each of the ones of the cells 1 and the inner wall of the case 2 can be blocked to support the cell 1. Thus, the displacement of the cells 1 relative to the case 2 due to lack of support around the ones of the cells 1 is prevented, and the normal flow of the cooling liquid will not be blocked.

Further, the end plate is hollow inside and can function as a stabilizer.

As shown in FIG. 1, in one or more embodiments of the present disclosure, the case 2 has a bottom wall and multiple side walls, the bottom wall and the side walls form the liquid-cooled installation chamber 23. The inlet 21 is located in a region of one of the side walls close to the bottom wall, and the outlet 22 is located in a region of the one of the side walls away from the bottom wall.

It can be appreciated that the liquid inlet 21 is located in the region of the one of the side walls close to the bottom wall, and the liquid outlet 22 is located in the region of the one of the side walls away from the bottom wall, so that the cooling liquid can dissipate heat upwardly from the bottom of the cells 1, thereby preventing heat accumulation in the middle parts of the multiple cells 1 so as to improve the heat dissipation effect around the multiple cells 1.

As shown in FIG. 2, in one or more embodiments of the present disclosure, the liquid-cooled battery pack includes a battery management system module 3, and a cover plate 4 provided on the top of the case 2 and spaced apart from the cooling liquid. The battery management system module 3 is provided in the gap between the cover plate 4 and the cooling liquid and is spaced apart from the cooling liquid.

It can be appreciated that the battery management system module 3 is located between the cover plate 4 and the battery module, so that there is no need to immerse the battery management system module 3 in the cooling liquid, thereby solving a sealing problem of the battery management system module 3, and reducing the length of the entire battery pack.

As shown in FIG. 4, in one or more embodiments of the present disclosure, the side wall of the case 2 is provided with an installation hole 25, and the battery management system module 3 further includes an installation support which fits the installation hole 25.

It can be appreciated that the top side wall of the case 2 is provided with the installation hole 25, and the battery management system module 3 further includes the installation support. The installation support fits the installation hole 25 to fix the battery management system module 3 to the cover plate 4, so that there is no need for the battery management system module 3 to be in contact with the cooling liquid, thereby enabling the battery management system module 3 to have better waterproof performance and increase its own life.

As shown in FIG. 2, in one or more embodiments of the present disclosure, the cover plate 4 and the case 2 form the liquid-cooled installation chamber 23 and an upper accommodation chamber 231. The upper accommodation chamber 231 is located above the liquid-cooled installation chamber 23 and is connected to the liquid-cooled installation chamber 23. The liquid level of the cooling liquid is lower than the lower opening of the upper accommodation chamber 231, and the battery management system module 3 is disposed in the upper accommodation chamber 231.

It can be appreciated that the cover plate 4 and the case 2 form the liquid-cooled installation chamber 23 and the upper accommodation chamber 231 configured to accommodate the battery management system module 3, so as to prevent the battery management system module 3 from being immersed in the cooling liquid. The cover plate 4 is such that the liquid-cooled installation chamber 23 is not flush with the top surfaces of the battery cells 1, and the level of the cooling liquid is flush with the top surface of the liquid-cooled installation chamber 23, so that vibration of the surface of the cooling liquid can be prevented.

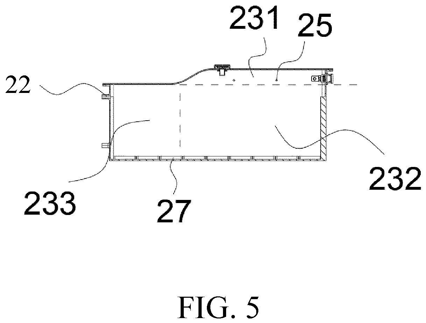

As shown in FIG. 5, in one or more embodiments of the present disclosure, the liquid-cooled installation chamber 23 has a first installation chamber section 232 and a second installation chamber section 233 disposed in a horizontal direction in sequence. The upper accommodation chamber 231 is disposed above the first installation chamber section 232 and staggered manner from the second installation chamber section 233. The liquid-cooled battery pack further includes a connection terminal 26 provided on the side wall of the case 2 and located in the upper accommodation chamber 231.

It can be appreciated that the cover plate 4 is such that the second installation chamber section 233 is flush with the top surfaces of the cells 1, and the level of the cooling liquid is flush with the top surface of the second installation chamber section 233, so that vibration of the surface of the cooling liquid can be prevented.

As shown in FIGS. 4 and 5, in one or more embodiments of the present disclosure, the inner bottom surface of the case 2 is provided with multiple location grooves 27 for locating the cells 1.

It can be appreciated that the bottom surface of the case 2 is provided with the location grooves 27 for locating the multiple cells 1. In the process of assembling the cells 1, the cells 1 are installed inside the case 2 one by one to prevent the cells 1 from shaking, and then the cells contact system (CCS) assembly and the battery management system module 3 are installed on the top of the cells 1. After the assembling, the cells 1 are relatively fixed, so that no shaking occur, and the liquid cooling passage is blocked.

In one or more embodiments of the present disclosure, the liquid-cooled battery pack further includes a cells contact system 5 and a connection terminal 26 electrically connected to each other. Every two adjacent ones of the cells 1 are electrically connected to each other through the cells contact system 5, and the cells contact system 5 is at least partially immersed in the cooling liquid. The connection terminal 26 is disposed on one of the side walls of the case 2 and is located above the cooling liquid.

It can be appreciated that the cells contact system 5 is located under the cover plate 4 and at least partially immersed in the cooling fluid with the cells 1. Thus, the cells contact system 5 needs to have a waterproof effect.

Some embodiments of the present disclosure have been described in detail above. The description of the above embodiments merely aims to help to understand the present disclosure. Many modifications or equivalent substitutions with respect to the embodiments may occur to those of ordinary skill in the art based on the present disclosure. Thus, these modifications or equivalent substitutions shall fall within the scope of the present disclosure.

## Claims

1. A liquid-cooled battery pack, comprising: a case (2); and a plurality of cells (1) and cooling liquid in the case (2),
wherein the case (2) is provided with one or more liquid inlets (21), a liquid-cooled installation chamber (23) and one or more liquid outlets (22);
the one or more liquid inlets (21), the liquid-cooled installation chamber (23) and the one or more liquid outlets (22) are connected in sequence to circulate the cooling liquid; and
the cells (1) are arranged in the liquid-cooled installation chamber (23), and each of the cells (1) is immersed in the cooling liquid and surrounded by the cooling liquid.

2. The liquid-cooled battery pack according to claim 1, wherein the cells (1) are arranged in an array to form at least two cell units arranged at intervals in a first direction, and each of the cell units comprises ones of the plurality of cells (1) arranged at intervals in a second direction; and
the one or more liquid inlets (21) comprise a plurality of liquid inlets (21) disposed respectively on opposite sides of each of the one or more liquid outlets (22) in the first direction; or the one or more liquid outlets (22) comprise a plurality of liquid outlets (22) disposed respectively on opposite sides of each of the one or more liquid inlets (21) in the first direction.

3. The liquid-cooled battery pack according to claim 2, wherein the case (1) has a bottom wall and a plurality of side walls, and the bottom wall and the side walls form the liquid-cooled installation chamber (23);
both the one or more liquid outlets (22) and the plurality of liquid inlets (21) are located on one of the side walls; and
the one or more liquid outlets (22) are disposed in a middle region of the one of the side walls in the first direction, and the plurality of liquid inlets (21) are disposed respectively in opposite side regions of the one of the side walls in the first direction; or the one or more liquid inlets (21) are disposed in a middle region of the one of the side walls in the first direction, and the plurality of liquid outlets (22) are disposed respectively in opposite side regions of the one of the side walls in the first direction.

4. The liquid-cooled battery pack according to claim 2, wherein opposite sides of the case (2) in the second direction are respectively provided with a plurality of end plates (24), and each of the end plates (24) is configured to abut against one of the plurality of cells (1) at an end of each of the cell units.

5. The liquid-cooled battery pack according to claim 1, wherein the case (2) has a bottom wall and a plurality of side walls, and the bottom wall and the side walls form the liquid-cooled installation chamber (23); and
the one or more liquid inlets (21) are located in a region of one of the side walls close to the bottom wall, and the one or more liquid outlets (22) are located in a region of the one of the side walls away from the bottom wall.

6. The liquid-cooled battery pack according to claim 1, further comprising a battery management system module (3) and a cover plate (4),
wherein the cover plate (4) is disposed on top of the case (2) and spaced apart from the cooling liquid; and
the battery management system module (3) is located in a gap between the cover plate (4) and the cooling liquid and spaced apart from the cooling liquid.

7. The liquid-cooled battery pack according to claim 6, wherein a side wall of the case (2) is provided with an installation hole (25); and
the battery management system module (3) has an installation support fitted into the installation hole (25).

8. The liquid-cooled battery pack according to claim 6, wherein the cover plate (4) and the case (2) form the liquid-cooled installation chamber (23), and an upper accommodation chamber (231) that is located above the liquid-cooled installation chamber (23) and is in communication with the liquid-cooled installation chamber (23);
a level of the cooling liquid is lower than a lower opening of the upper accommodation chamber (231); and
the battery management system module (3) is disposed in the upper accommodation chamber (231).

9. The liquid-cooled battery pack according to claim 8, wherein the liquid-cooled installation chamber (23) comprises a first installation chamber section (232) and a second installation chamber section (233) arranged in a horizontal direction;
the upper accommodation chamber (231) is located above the first installation chamber section (232) and is staggered from the second installation chamber section (233); and
the liquid-cooled battery pack further comprises a connection terminal (26) disposed on a side wall of the case (2) and located in the upper accommodation chamber (231).

10. The liquid-cooled battery pack according to claim 1, wherein an inner bottom surface of the case (2) is provided with a plurality of location grooves (27) for locating the cells (1), respectively.

11. The liquid-cooled battery pack according to claim 1, further comprising a cells contact system (5) and a connection terminal (26) electrically connected to the cells contact system (5),
wherein every two adjacent ones of the cells (1) are electrically connected to each other through the cells contact system (5);
the cells contact system (5) is at least partially immersed in the cooling liquid; and
the connection terminal (26) is disposed on a side wall of the case (2) and is located above the cooling liquid.
